# EUROPÄISCHE PATENTANMELDUNG

(11) **EP 4 518 064 A1**
(43) Veröffentlichungstag der Anmeldung: **05.03.2025**
(21) Anmeldenummer: 24187572.3
(22) Anmeldetag: 10.07.2024
(51) Int. Cl.: H02G 3/32, B60L 53/18, F16G 11/04, F16G 11/10, F16L 3/08, F16L 3/10, H02G 11/00

(54) **HALTER, INSBESONDERE KABELHALTER**

(30) Priorität: 31.08.2023 DE 102023208389
(71) Anmelder: Siemens Aktiengesellschaft, 80333 München (DE)
(72) Erfinder: Adomeit, Julius, 10965 Berlin (DE); Lehmann, Robert, 04103 Leipzig (DE)
(74) Vertreter: Siemens Patent Attorneys

(57) **Zusammenfassung**

Die Erfindung betrifft einen Halter (1), umfassend zumindest:
- einen Halteabschnitt (6) zur Aufnahme, Führung und/oder Halterung mindestens eines länglichen Gegenstandes und
- einen Befestigungsabschnitt (8, 8') für den Halter (1),
wobei der Befestigungsabschnitt (8, 8') einen Seilhalter (40) umfasst, der selbstfixierend, insbesondere selbstklemmend, ausgebildet ist. Ein zweiter Aspekt der Erfindung betrifft eine Ladesäule mit einem Ladekabel, einer Seilaufhängung und wenigstens einem Halter (1) gemäß dem ersten Erfindungsaspekt.

## Beschreibung

Die Erfindung betrifft einen Halter für einen Gegenstand, insbesondere einen länglichen Gegenstand, wie zum Beispiel eine Leitung, ein Rohr, ein Kabel oder dergleichen.

Halter für Kabel, Rohre, Leitungen sind allgemein bekannt. Derartige Halter können beispielsweise über einen Flansch, einen Bügel, einen Haken oder dergleichen befestigt werden. Auch sind Seilklemmen bekannt, mittels welcher der Halter beispielsweise an einer Wand oder einem Träger befestigt oder gehalten werden kann.

Der Erfindung liegt die Aufgabe zugrunde, einen einfach aufgebauten und wenige Komponenten umfassenden Halter für einen Gegenstand bereitzustellen.

Die Aufgabe wird erfindungsgemäß gelöst durch einen Halter, der zumindest einen Halteabschnitt zur Aufnahme, Führung und/oder Halterung mindestens eines Gegenstandes, insbesondere eines Ladekabels, und zumindest einen Befestigungsabschnitt für den Halter umfasst, wobei der Befestigungsabschnitt einen Seilhalter umfasst, der selbstfixierend, insbesondere selbstklemmend, ausgebildet ist.

Vorteilhafte Ausgestaltungen der Erfindung sind Gegenstand der Unteransprüche.

Die mit der Erfindung erzielten Vorteile bestehen insbesondere darin, dass der Halter einfach aufgebaut und maximal zwei oder drei Komponenten umfasst. Beispielsweise kann der Halter nur aus einem Gehäuse und dem Seilhalter oder aus zwei Gehäuseteilen und dem Seilhalter gebildet sein.

Der Halter kann beispielsweise ein Einfachhalter oder Mehrfachhalter sein. Insbesondere kann der Halter als ein Einfachkabelhalter zur Aufnahme, Führung und/oder Halten eines einfachen Kabels ausgebildet sein. Alternativ kann der Halter als ein Mehrfachkabelhalter zur Aufnahme, Führung und/oder Halten von mehreren Kabeln ausgebildet sein.

Der Halteabschnitt des Halters kann beispielsweise zur Aufnahme, zur Führung und/oder zum Halten eines länglichen Gegenstandes, wie zum Beispiel einer Leitung eines Rohrs oder eines Kabels, ausgebildet sein. Der Gegenstand kann beispielsweise lose und begrenzt beweglich oder klemmend und ortsfest mittels des Halters gehalten sein. Der insbesondere längliche Gegenstand, zum Beispiel ein Kabel, beispielsweise ein Ladekabel oder Stromkabel, kann flexibel, biegesteif oder biegeschlaff ausgebildet sein.

Der als Seilhalter ausgebildete Befestigungsabschnitt ermöglicht eine einfache und zeitsparende Montage des Halters zum Beispiel an einer Wand, einem Träger oder einem Rost. Der Befestigungsabschnitt ist in dem Halter integriert. Alternativ oder zusätzlich kann das Seil des Befestigungsabschnitts zum Anordnen und Führen des länglichen Gegenstands, insbesondere eines Kabels, wie zum Beispiel eines Ladekabels, vorgesehen sein.

In einer möglichen Ausführungsform ist der Seilhalter eingerichtet, ein Seil, insbesondere ein loses Befestigungsseil oder Führungsseil, durch eine Lastbeanspruchung klemmend zu fixieren.

Eine weitere Ausführungsform sieht vor, dass der Halter zwei Halbkörper umfasst, welche im zusammengesetzten Zustand einen Gesamthohlkörper mit dem Halteabschnitt und dem Befestigungsabschnitt bilden. Beispielsweise sind die Halbkörper als Halbschalen ausgebildet, die miteinander verbindbar sind. Beispielsweise können die beiden Halbkörper miteinander verschraubt, verklipst oder verklemmt werden.

In einer weiteren möglichen Ausführungsform kann zumindest einer der Halbkörper im Befestigungsabschnitt mindestens zwei Klemmkörper umfassen, die eingerichtet sind, bei einer Lastbeanspruchung das Seil, insbesondere das Befestigungsseil oder Führungsseil, zwischen diesen Klemmkörpern klemmend und/oder an diesen Klemmkörpern lagefest (auch ortsfest genannt) zu fixieren.

Beispielsweise kann ein erster Klemmkörper ortsfest im Befestigungsabschnitt angeordnet sein. Der erste Klemmkörper kann zum Beispiel als ein Seilführungskörper ausgebildet sein. Des Weiteren kann ein zweiter Klemmkörper lose in den Befestigungsabschnitt vor einem klemmenden Fixieren des Seils einlegbar sein. Insbesondere ist der zweite Klemmkörper ein separater Körper, der beispielsweise in den Befestigungsabschnitt eingesetzt oder eingelegt werden kann.

Beispielsweise kann der zweite Klemmkörper in eine Schlinge des im Befestigungsabschnitt eingelegten Seils einlegbar oder einsetzbar sein.

Eine Weiterbildung sieht vor, dass die Klemmkörper derart im Befestigungsabschnitt ausgebildet und zueinander angeordnet sein können, dass das Seil mäanderförmig um diese Klemmkörper geführt ist. Insbesondere kann das Seil mittels der Klemmkörper knotenfrei geführt und nach Lastbeanspruchung knotenfrei verklemmt und ortsfest fixiert sein. Die Klemmkörper können beispielsweise zueinander korrespondierende Außenkonturen umfassen. Beispielsweise können die Klemmkörper jeweils eine gleiche oder ähnliche Tropfenform, Dreiecksform, ovale Form oder dergleichen aufweisen.

In einer weiteren Ausführungsform kann jeder Halbkörper im Halteabschnitt eine axial verlaufende, halbkreisförmige Längsöffnung aufweisen. Die Längsöffnung kann im zusammengesetzten und optional verbundenen Zustand der Halbkörper eine Halteöffnung für den mindestens einen zu haltenden Gegenstand, insbesondere einen länglichen Gegenstand, wie zum Beispiel ein Kabel, bilden.

Ein zweiter Erfindungsaspekt betrifft eine Ladesäule für ein Elektrofahrzeug. Die Ladesäule umfasst ein Ladekabel, eine Seilaufhängung und wenigstens einen Halter gemäß dem ersten Erfindungsaspekt in einer Ausführung mit einem Seil. Das Ladekabel ist damit abschnittsweise in dem Halteabschnitt des wenigstens einen Halters angeordnet. Ein freies Ende des Seils des wenigstens einen Halters ist an der Seilaufhängung befestigt. Beispielsweise kann das Ladekabel an mehreren Punkten entlang seiner Haupterstreckungsrichtung mit einem jeweiligen Halter versehen sein, so dass zwischen benachbarten Haltern eine freie Länge des Ladekabels verbleibt.

Die Seilaufhängung kann beispielsweise mit Gelenken oder Scharnieren ausgestattet sein, die ein Strecken der Seilaufhängung einer auf das Ladekabel wirkenden Zugkraft erlauben. Dadurch wird es möglich, dass eine Person einen am Ende des Ladekabels angeordneten Ladestecker greift und zu dem Ladeanschluss an ihrem Elektrofahrzeug zieht, woraufhin das Ladekabel und die Seilaufhängung verhältnismäßig kraftfrei der Person folgen. Die Person muss dabei nur die für ein Strecken der Seilaufhängung erforderliche Zugkraft aufbringen, nicht jedoch das gegebenenfalls hohe Gewicht eines für hohe Ladeleistungen ausgelegten Ladekabels bewältigen. Vorzugsweise sind die Gelenke oder Scharniere dabei so ausgebildet, dass sie eine Rückstellkraft bewirken, die bei Wegfall der Zugkraft ein Zusammen- und Rückziehen des Ladekabels bewirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch in perspektivischer Darstellung einen Halter, gebildet aus zwei Halbkörpern,
- FIG 2: schematisch in perspektivischer Darstellung einen Halbkörper des Halters,
- FIG 3: schematisch in Draufsicht als Teilansicht eines Halbkörpers des Halters einen Befestigungsabschnitt von innen mit einem eingelegten Seil vor einem Einsetzen eines losen Klemmkörpers,
- FIG 4: schematisch in Draufsicht den Befestigungsabschnitt nach FIG 3 mit eingesetztem losen Klemmkörper,
- FIG 5: schematisch in Draufsicht den Befestigungsabschnitt im geschlossenen Zustand,
- FIG 6: schematisch eine Lastbeanspruchung des geschlossenen Befestigungsabschnitts,
- FIG 7: schematisch in Draufsicht den Befestigungsabschnitt geöffnet und von innen nach der Lastbeanspruchung.

Einander entsprechende Teile sind in den Figuren mit denselben Bezugszeichen versehen.

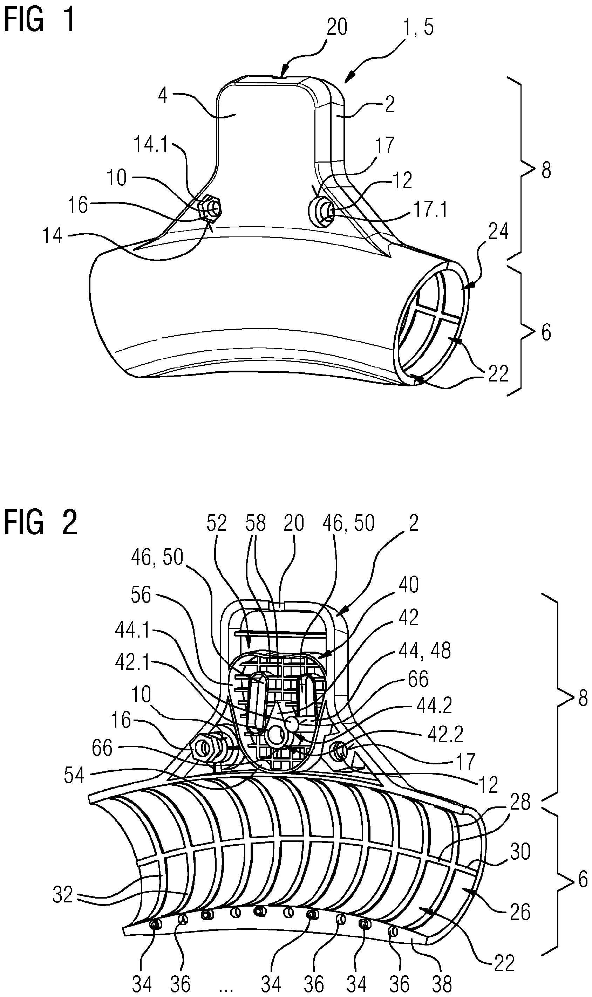

Figur 1 zeigt schematisch in perspektivischer Darstellung einen Halter 1 zur Aufnahme, Führung und/oder Halterung mindestens eines Gegenstands (nicht näher dargestellt). Der Gegenstand kann insbesondere ein länglicher Gegenstand, zum Beispiel ein Kabel, beispielsweise ein Ladekabel, Stromkabel, Erdkabel oder dergleichen, eine Leitung, beispielsweise eine Stromleitung oder dergleichen oder ein Rohr sein. Der Gegenstand kann biegesteif oder biegeschlaff ausgebildet sein. Der Gegenstand kann flexibel ausgebildet sein.

Der Halter 1 kann als ein Einfachhalter für einen einzelnen Gegenstand oder als ein Mehrfachhalter für mehrere Gegenstände ausgebildet sein. Der Halter 1 kann als ein Kabelhalter, ein Leitungshalter oder ein Rohrhalter ausgebildet sein. Bei einer Ausbildung als Kabelhalter wird der Halter 1 auch als Kabelschelle bezeichnet.

Der Halter 1 kann aus zwei Halbkörpern 2, 4 gebildet sein. Die beiden Halbkörper 2 und 4 können beispielsweise spiegelsymmetrisch zueinander aufgebaut sein. Die beiden Halbkörper 2 und 4 können darüber hinaus auch als Gleichteile, insbesondere identische Gleichteile, aufgebaut sein.

Der Halter 1 weist einen Halteabschnitt 6 und einen Befestigungsabschnitt 8 auf.

Die zwei Halbkörper 2 und 4 bilden im zusammengesetzten Zustand einen Gesamthohlkörper 5 mit dem Halteabschnitt 6 und dem Befestigungsabschnitt 8. Beispielsweise sind die Halbkörper 2 und 4 als Halbschalen ausgebildet, die miteinander verbindbar sind. Beispielsweise können die beiden Halbkörper 2 und 4 miteinander verschraubt, verklipst oder verklemmt werden.

Der Halteabschnitt 6 des Halbkörpers 2 ist zur Aufnahme, Führung und/oder Halterung des mindestens einen Gegenstands ausgebildet.

Der Befestigungsabschnitt 8 kann beispielsweise mindestens eine, bevorzugt zwei, Durchgangsöffnung/en 10, 12 umfassen, welche der Verbindung der beiden Halbkörper 2, 4 zum Beispiel mittels einer Schraubverbindung oder Nietverbindung oder dergleichen dienen.

Eine der Durchgangsöffnungen 10 kann zumindest im Eingangsbereich eine Ausnehmung 14 umfassen, in welche beispielsweise eine Mutter 16, insbesondere eine Vierkantmutter oder Sechskantmutter, eingesetzt werden kann oder integriert ist, insbesondere umspritzt ist. Die Ausnehmung 14 weist einen größeren Durchmesser als die zugehörige Durchgangsöffnung 10 auf.

Die Ausnehmung 14 weist hierzu eine entsprechende mehreckige Innenkontur 14.1 auf.

Die andere Durchgangsöffnung 12 kann zumindest im Eingangsbereich eine weitere Ausnehmung 17 umfassen, in welche ein Schraubenkopf eingeschraubt werden kann. Die weitere Ausnehmung 17 weist hierzu eine entsprechende weitere Innenkontur 17.1 auf. Die Ausnehmung 17 weist einen größeren Durchmesser als die zugehörige Durchgangsöffnung 12 auf.

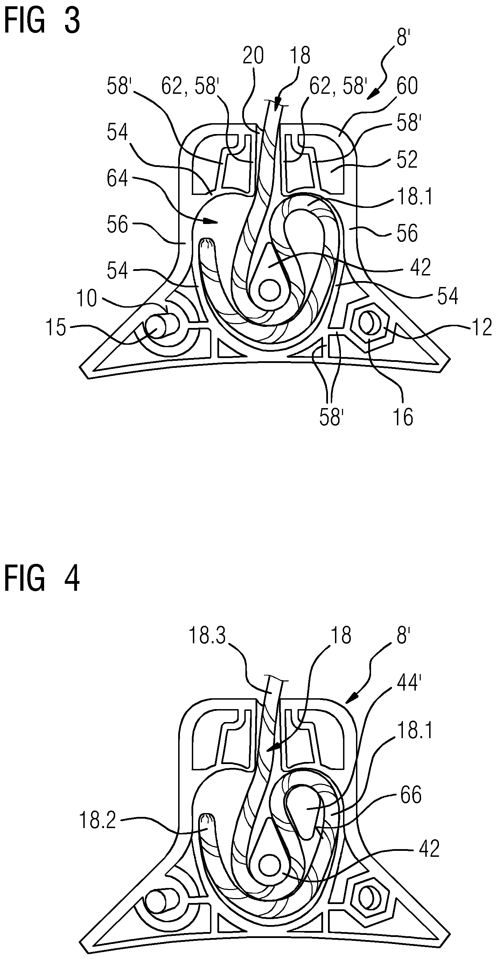

Der Befestigungsabschnitt 8 kann darüber hinaus der Aufnahme und Fixierung eines Seils 18, dargestellt in Figur 3, dienen. Hierzu weist der Befestigungsabschnitt 8 eine Ausgangsöffnung 20 für das Seil 18 auf.

Jeder Halbkörper 2 und 4 weist im Halteabschnitt 6 eine axial verlaufende, halbkreisförmige Längsöffnung 22 auf. Die jeweilige Längsöffnung 22 kann im zusammengesetzten und optional verbundenen Zustand der Halbkörper 2 und 4 eine Halteöffnung 24 für den mindestens einen zu haltenden Gegenstand bilden.

Figur 2 zeigt schematisch in perspektivischer Darstellung einen der Halbkörper 2 des Halters 1. Im nachfolgenden wird der Halbkörper 2 beispielhaft näher beschrieben. Der andere Halbkörper 4 ist analog aufgebaut. Die nachfolgende Beschreibung gilt damit auch für den Halbkörper 4.

Der Halteabschnitt 6 kann beispielsweise zur Aufnahme, zur Führung und/oder zum Halten eines länglichen Gegenstandes, wie zum Beispiel einer Leitung eines Rohrs oder eines Kabels, ausgebildet sein. Der Gegenstand kann beispielsweise lose und begrenzt beweglich, insbesondere längsbeweglich und/oder radial beweglich, oder klemmend und ortsfest mittels des Halters 1 gelagert beziehungsweise gehalten sein. Der insbesondere längliche Gegenstand, zum Beispiel ein Kabel, beispielsweise ein Ladekabel oder Stromkabel, kann flexibel, biegesteif oder biegeschlaff ausgebildet sein.

Der Halteabschnitt 6 kann mit einem Innenprofil 26, insbesondere mit Rippen 28, zum Beispiel Längsrippen 30 und Umfangsrippen 32, versehen sein, wie dargestellt. Das Innenprofil 26 dient beispielsweise einer Festigkeit des Halteabschnitts 6. Bei einer solchen Ausbildung des Halbkörpers 2 kann der Gegenstand lose und insbesondere längsbeweglich und begrenzt radialbeweglich im Halter 1 gelagert sein.

Alternativ oder zusätzlich kann eine Klemmeinheit (nicht dargestellt) oder Fixiereinheit (nicht dargestellt) im Halteabschnitt 6 für eine ortsfeste Lagerung des Gegenstands im Halter 1 vorgesehen sein.

Zusätzlich kann der Halbkörper 2 mit Stiften 34 und Stiftöffnungen 36 für eine Steckverbindung zwischen den beiden Halbkörpern 2 und 4 ausgestattet sein.

Die Stifte 34 und die Stiftöffnungen 36 sind beispielsweise an beziehungsweise in einer Wandung 38, insbesondere an einer beziehungsweise in einer Stirnfläche der Wandung 38 des Halbkörpers 2, entlang der Längsöffnung 22 des Halbkörpers 2 abwechselnd angeordnet. Insbesondere sind die Stifte 34 (auch Stecker oder Pins genannt) und Stiftöffnungen 36 (auch Buchsen genannt) in jener Wandung 38 des Halbkörpers 2 angeordnet, die dem Befestigungsabschnitt 8 gegenüberliegt.

Der Befestigungsabschnitt 8 umfasst einen Seilhalter 40. Der Befestigungsabschnitt 8 ermöglicht eine einfache und zeitsparende Montage des Halters 1 zum Beispiel an einer Wand, einem Träger oder einem Rost (nicht näher dargestellt).

Der Befestigungsabschnitt 8 ist in dem Halter 1 integriert.

Der Seilhalter 40 kann in jeder der Halbkörper 2 und 4 oder auch nur in einem der Halbkörper 2 oder 4 vorgesehen sein.

Nachfolgend wird der Seilhalter 40 für den Halbkörper 2 beschrieben. Ist auch im Befestigungsabschnitt 8 des Halbkörpers 4 der Seilhalter 40 vorgesehen, so ist dieser analog aufgebaut.

Der Seilhalter 40 dient der Aufnahme und der Fixierung des Seils 18 (in Figur 3 dargestellt) im Halter 1. Zusätzlich kann das Seil 18 zum Anordnen und Führen des länglichen Gegenstands, insbesondere eines Kabels, wie zum Beispiel eines Ladekabels, vorgesehen sein.

Der Seilhalter 40 umfasst zum Beispiel einen ersten Klemmkörper 42, der ortsfest im Befestigungsabschnitt 8 angeordnet ist. Der erste Klemmkörper 42 ist beispielsweise als ein Seilführungskörper 42.1 ausgebildet. Insbesondere kann der erste Klemmkörper 42 einem Umlenkabschnitt 42.2, zum Beispiel einen runden Konturenabschnitt, einen ovalen Konturenabschnitt oder dergleichen, für eine Seilumlenkung umfassen. Der erste Klemmkörper 42 kann beispielsweise zur Seilführung und/oder Seilumlenkung eine tropfenförmige Außenkontur 66 aufweisen.

Der Seilhalter 40 umfasst zum Beispiel einen zweiten Klemmkörper 44. Im Ausführungsbeispiel nach Figur 2 ist der zweite Klemmkörper 44 beweglich im Befestigungsabschnitt 8 angeordnet.

Der Seilhalter 40 kann zum Beispiel eine oder mehrere Führungen 46 für den zweiten Klemmkörper 44 umfassen. Im Beispiel nach Figur 2 sind zwei Führungen 46 vorgesehen. Die jeweilige Führung 46 erstreckt sich insbesondere annähernd senkrecht zur Längsausdehnung des Halteabschnitts 6, insbesondere annähernd senkrecht zur Längsöffnung 22. Die Führungen 46 sind beispielsweise jeweils als ein länglicher Schlitz 50 ausgebildet.

Der zweite Klemmkörper 44 kann in eine der Führungen 46 eingesteckt und entlang des länglichen Schlitzes 50 bewegt werden. Der zweite Klemmkörper 44 ist beispielsweise als ein Stift 48 ausgebildet.

Der zweite Klemmkörper 44 ist beispielsweise als ein Seilführungskörper 44.1 ausgebildet. Der zweite Klemmkörper 44 weist einen Umlenkabschnitt 44.2, zum Beispiel einen runden Konturenabschnitt, einen ovalen Konturenabschnitt oder dergleichen, für eine Seilumlenkung auf. Der zweite Klemmkörper 44 ist beispielsweise als ein zylinderförmiger Stift 48 mit einer kreisrunden Außenkontur 66 ausgebildet.

Der Seilhalter 40 ist in einer Aufnahme 52 im Befestigungsabschnitt 8 ausgebildet. Die Aufnahme 52 ist schalenförmig ausgebildet. Die Aufnahme 52 ist derart ausgebildet, dass das Seil 18 in dieser bündig gelagert werden kann.

Der Seilhalter 40 kann eine zumindest teilweise umlaufende Innenwand 54 aufweisen. Die Innenwand 54 und/oder ein Außenwandabschnitt 56 des Halbkörpers 2 dient als Begrenzungsfläche oder Anlagefläche für das Seil 18.

Zusätzlich können in der Aufnahme 52 eine Anzahl von Versteifungsrippen 58, insbesondere Vertikalrippen und/oder Querrippen, zum Beispiel kreuzweise angeordnet sein. Die Versteifungsrippen 58 sind innerhalb des Seilhalters 40, insbesondere innerhalb der Innenwand 54 angeordnet.

Der Halbkörper 2 ist ein Spritzgussteil, insbesondere ein Kunststoffspritzgussteil. Der Befestigungsabschnitt 8 mit den Durchgangsöffnungen 10, 12, den Versteifungsrippen 58, dem Seilhalter 40 mit den Führungen 46, dem ortsfesten, ersten Klemmkörper 42, der Innenwand 54, sowie der Halteabschnitt 6 mit der Längsöffnung 22 und dem Innenprofil 26 sowie den Stiften 34 und den Stiftöffnungen 36 ist integriert in dem Halbkörper 2 und werden beim Spritzgussverfahren geformt, insbesondere ausgeformt.

Im Befestigungsabschnitt 8 können in den Durchgangsöffnungen 10, 12 Muttern 16, insbesondere Metallmutterelemente, und/oder Schraubelemente 15, insbesondere Gewindebolzen oder Schrauben, eingespritzt oder umspritzt angeordnet sein.

Die Ausgangsöffnung 20 ist im Halbkörper 2 als eine halbkreisförmige Aussparung ausgebildet.

Figur 3 zeigt schematisch in Draufsicht als Teilansicht einen alternativen Befestigungsabschnitt 8' des Halbkörpers 2 von innen. Der Halteabschnitt 6 ist nicht dargestellt.

Der Befestigungsabschnitt 8' unterscheidet sich vom Befestigungsabschnitt 8 nach Figur 8 darin, dass keine Führungen 46 und damit keine Schlitze 50 und kein Stift 48 vorgesehen sind.

Der Befestigungsabschnitt 8' umfasst in analoger Art und Weise den ortsfesten ersten Klemmkörper 42, insbesondere einen tropfenförmigen ersten Klemmkörper 42. Die Innenwand 54 ist in analoger Art und Weise in der Aufnahme 52 des Befestigungsabschnitts 8' angeordnet.

Darüber hinaus unterscheidet sich der Befestigungsabschnitt 8' in Bezug auf die Versteifungsrippen 58'. Die Versteifungsrippen 58' nach Figur 3 sind zwischen Innenwand 54 und einer Außenwand 60 des Befestigungsabschnitts 8' angeordnet. Es sind weniger und dafür stärkere Versteifungsrippen 58' zwischen Innenwand 54 und Außenwand 60. Mit anderen Worten: Die Versteifungsrippen 58' sind außerhalb des Seilhalters 40 im Befestigungsabschnitt 8' angeordnet.

Im Bereich der halbkreisförmigen Ausgangsöffnung 20 für das Seil 18 können zwei der Versteifungsrippen 58' als Führungsrippen 62 ausgebildet sein.

Im Befestigungsabschnitt 8' können, wie in Figur 2 beschrieben, in analoger Art und Weise in den Durchgangsöffnungen 10, 12 Muttern 16, insbesondere Metallmutterelemente, und/oder Schraubelemente 15, insbesondere Gewindebolzen oder Schrauben, eingespritzt oder umspritzt angeordnet sein.

Figur 3 zeigt das Seil 18 in dem Befestigungsabschnitt 8' eingelegt. Das Seil 18 ist lose um den ersten Klemmkörper 42 gelegt. Insbesondere ist der Seilhalter 40, insbesondere dessen Innenwand 54, derart geformt und bemessen, dass das Seil 18 mit einer Schlaufe oder Schlinge 18.1 und mäanderförmig in dem Seilhalter 40 vor einem Einsetzen eines losen zweiten Klemmkörpers 44' (dargestellt in Figur 4) eingelegt werden kann oder ist.

Der Seilhalter 40 ist insbesondere eingerichtet, das Seil 18, insbesondere ein loses Befestigungsseil oder Führungsseil, durch eine Lastbeanspruchung klemmend zu fixieren, wie es nachfolgend näher beispielhaft beschrieben wird.

Die nachfolgende Beschreibung des klemmenden Fixierens gilt für beide Ausführungsformen nach Figur 2 (in der Führung 46 beweglicher zweiter Klemmkörper 44) und Figur 3 (lose einsetzbarer zweiter Klemmkörper 44').

Durch die lose Anordnung des zweiten Klemmkörpers 44' im Seilhalter 40 ist ein innerhalb der Innenwand 54 und der Außenwandabschnitte 56 gebildeter Seilaufnahmeraum 64 rippenfrei ausgebildet. Mit anderen Worten: In diesem Seilaufnahmeraum 64 sind keine Versteifungsrippen 58' vorgesehen.

Figur 4 zeigt schematisch in Draufsicht den Befestigungsabschnitt 8' nach Figur 3 mit dem eingesetzten losen zweiten Klemmkörper 44'.

Der zweite Klemmkörper 44' ist ein separates Bauteil. Der zweite Klemmkörper 44' weist eine zum ersten Klemmkörper 42 korrespondierende Außenkontur 66 auf. Insbesondere sind beide Klemmkörper 42 und 44' tropfenförmig ausgebildet.

Der zweite Klemmkörper 44' wird in die lose Schlinge 18.1 des Seils 18 eingelegt.

Ein erstes Seilende 18.2 des Seils 18 ist frei im Seilhalter 40 angeordnet. Ein zweites Seilende 18.3 ist aus der Ausgangsöffnung 20 herausgeführt und dient der Befestigung des Halters 1.

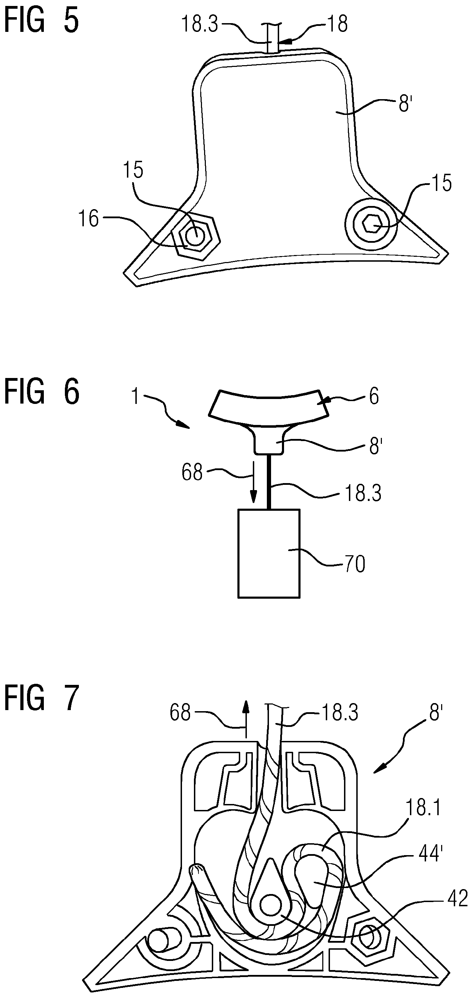

Figur 5 zeigt schematisch in Draufsicht den Befestigungsabschnitt 8' im geschlossenen Zustand und ohne den Halteabschnitt 6.

Die beiden Halbkörper 2 und 4 sind mittels Schraubelementen 15 und Muttern 16 miteinander verbunden.

Das zweite Seilende 18.3 ragt aus der Ausgangsöffnung 20 des Halters 1 (dargestellt in Figur 1) heraus.

Figur 6 zeigt schematisch eine Lastbeanspruchung gemäß Pfeil 68 des Halters 1 im geschlossenen Zustand mit dem Befestigungsabschnitts 8' (oder alternativ dem Befestigungsabschnitt 8) und dem Halteabschnitt 6. Dies ist ein Testaufbau, in welchem der Befestigungsabschnitt 8' des Halters 1 hinsichtlich des selbstklemmenden Seilhalters 40 getestet wird.

Alternativ kann der Seilhalter 40 des Halters 1 durch einen solchen Lastaufbau während der Herstellung das Seil 18 selbstfixieren. Insbesondere ist der Seilhalter 40 eingerichtet, das Seil 18 durch die Lastbeanspruchung gemäß Pfeil 68 im Befestigungsabschnitt 8' klemmend zu fixieren.

Alternativ kann im Normalgebrauch der Halter 1 bei Befestigung an einem Gerüst, an einer Wand oder an einem Träger mit dem aufgenommenen länglichen Gegenstand und insbesondere der Seilhalter 40 eingerichtet sein, das Seil 18 selbst zu fixieren, insbesondere selbst zu verklemmen. Mit anderen Worten: Der Seilhalter 40 ist selbstfixierend, insbesondere selbstklemmend, ausgebildet.

Der Halter 1 ist einfach aufgebaut und umfasst die zwei Halbkörper 2 und 4 als zwei Gehäuseteile mit integriertem Seilhalter 40 und das Seil 18 (Beispiel nach Figur 2) und optional zusätzlich den losen zweiten Klemmkörper 44' (Beispiel nach Figur 3).

Zur Selbstfixierung, insbesondere Selbstverklemmung, des Seils 18 im Seilhalter 40 wird das zweite Seilende 18.3 mit einer vorgegebenen Last 70 beaufschlagt, wie dies in Figur 6 dargestellt ist.

Figur 7 zeigt schematisch in Draufsicht den Befestigungsabschnitt 8' geöffnet und von innen nach der Lastbeanspruchung gemäß Pfeil 68 durch die Last 70 (dargestellt in Figur 6).

Die zuvor beschriebenen zwei Klemmkörper 42 und 44' (alternativ 42 und 44) sind derart eingerichtet und wirken bei der Lastbeanspruchung gemäß Pfeil 68 derart miteinander, dass das Seil 18 zwischen diesen Klemmkörpern 42 und 44' (oder 42 und 44) klemmend, insbesondere verklemmt, und/oder an diesen Klemmkörpern 42 und 44' (oder 42 und 44) lagefest (ortsfest) fixiert wird.

Durch die Lastbeanspruchung gemäß Pfeil 68 wird die Schlinge 18.1 zugezogen und nimmt dabei den losen zweiten Klemmkörper 44' (Beispiel nach Figur 3) oder den beweglichen zweiten Klemmkörper 44 (Beispiel nach Figur 2) mit und bewegt diesen in Richtung des ortsfesten ersten Klemmkörpers 42, so dass das Seil 18 zwischen beiden Klemmkörpern 42 und 44' (wie in Figur 7 dargestellt) beziehungsweise 42 und 44 (nicht dargestellt) verklemmt und/oder lagefest fixiert wird.

Dabei ist das Seil 18 knotenfrei, insbesondere mäanderförmig, um die beiden Klemmkörper 42 und 44' (oder 42 und 44) gelegt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie er durch die nachfolgenden Patentansprüche definiert wird, zu verlassen.

### Bezugszeichenliste

- 1: Halter
- 2: Halbkörper
- 4: Halbkörper
- 5: Gesamthohlkörper
- 6: Halteabschnitt
- 8, 8': Befestigungsabschnitt
- 10: Durchgangsöffnung
- 12: Durchgangsöffnung
- 14: Ausnehmung
- 14.1: Innenkontur
- 15: Schraubelement
- 16: Mutter
- 17: weitere Ausnehmung
- 17.1: weitere Innenkontur
- 18: Seil
- 18.1: Schlinge
- 18.2: erstes Seilende
- 18.3: zweites Seilende
- 20: Ausgangsöffnung
- 22: Längsöffnung
- 24: Halteöffnung
- 26: Innenprofil
- 28: Rippe
- 30: Längsrippe
- 32: Umfangsrippe
- 34: Stift
- 36: Stiftöffnung
- 38: Wandung
- 40: Seilhalter
- 42: erster Klemmkörper
- 42.1: Seilführungskörper
- 42.2: Umlenkabschnitt
- 44, 44': zweiter Klemmkörper
- 44.1: Seilführungskörper
- 44.2: Umlenkabschnitt
- 46: Führung
- 48: Stift
- 50: Schlitz
- 52: Aufnahme
- 54: Innenwand
- 56: Außenwandabschnitt
- 58, 58': Versteifungsrippe
- 60: Außenwand
- 62: Führungsrippe
- 64: Seilaufnahmeraum
- 66: Außenkontur
- 68: Pfeil
- 70: Last

## Patentansprüche

1. Halter (1), umfassend zumindest:
- einen Halteabschnitt (6) zur Aufnahme, Führung und/oder Halterung mindestens eines länglichen Gegenstandes und
- einen Befestigungsabschnitt (8, 8') für den Halter (1), wobei der Befestigungsabschnitt (8, 8') einen Seilhalter (40) umfasst, der selbstfixierend, insbesondere selbstklemmend, ausgebildet ist.

2. Halter (1) nach Anspruch 1, wobei der Seilhalter (40) eingerichtet ist, ein im Befestigungsabschnitt (8, 8') angeordnetes Seil (18) durch eine Lastbeanspruchung selbst zu fixieren, insbesondere klemmend zu fixieren.

3. Halter (1) nach Anspruch 1 oder 2, umfassend zwei Halbkörper (2, 4), welche im zusammengesetzten Zustand einen Gesamthohlkörper (5) mit dem Halteabschnitt (6) und dem Befestigungsabschnitt (8, 8') bilden.

4. Halter (1) nach Anspruch 2, wobei zumindest einer der Halbkörper (2) im Befestigungsabschnitt (8, 8') mindestens zwei Klemmkörper (42, 44, 44') umfasst, die eingerichtet sind, bei Lastbeanspruchung das Seil (18) zwischen diesen Klemmkörpern (42, 44, 44') klemmend und/oder an diesen Klemmkörpern (42, 44, 44') lagefest zu fixieren.

5. Halter (1) nach Anspruch 4, wobei ein erster Klemmkörper (42) ortsfest im Befestigungsabschnitt (8, 8') angeordnet ist.

6. Halter (1) nach Anspruch 5, wobei der erste Klemmkörper (42) als ein Seilführungskörper (42.1) ausgebildet ist.

7. Halter (1) nach einem der Ansprüche 4 bis 6, wobei ein zweiter Klemmkörper (44, 44') beweglich in dem Befestigungsabschnitt (8) angeordnet ist oder lose in den Befestigungsabschnitt (8') vor einem klemmenden Fixieren des Seils (18) einlegbar ist.

8. Halter (1) nach Anspruch 7, wobei der zweite Klemmkörper (44, 44') in eine Schlinge (18.1) des im Befestigungsabschnitt (8') eingelegten Seils (18) einlegbar ist.

9. Halter (1) nach einem der Ansprüche 4 bis 8, wobei die Klemmkörper (42, 44, 44') derart im Befestigungsabschnitt (8, 8') ausgebildet und zueinander angeordnet sind, dass das Seil (18) mäanderförmig um diese Klemmkörper (42, 44, 44') geführt ist.

10. Halter (1) nach einem der Ansprüche 3 bis 9, wobei jeder Halbkörper (2, 4) im Halteabschnitt (6) eine axial verlaufende, halbkreisförmige Längsöffnung (22) aufweist, wobei die beiden Längsöffnungen (22) im zusammengesetzten Zustand der Halbkörper (2, 4) eine Halteöffnung (24) für den mindestens einen zu haltenden Gegenstand bilden.

11. Ladesäule für ein Elektrofahrzeug, die Ladesäule umfassend ein Ladekabel, eine Seilaufhängung und wenigstens einen Halter (1) gemäß einem der Ansprüche 2 bis 10, wobei das Ladekabel abschnittsweise in dem Halteabschnitt (6) des wenigstens einen Halters (1) angeordnet ist und ein freies Ende des Seils (18) des wenigstens einen Halters (1) an der Seilaufhängung befestigt ist.

12. Die Ladesäule des vorhergehenden Anspruchs, bei der die Seilaufhängung mit einem oder mehreren Gelenken oder Scharnieren ausgestattet ist, die dazu ausgebildet sind, die Seilaufhängung infolge einer auf das Ladekabel wirkenden Zugkraft zu strecken.
